# EUROPEAN PATENT APPLICATION

(11) **EP 1 593 938 A1**
(43) Date of publication of application: **09.11.2005**
(21) Application number: 04010565.2
(22) Date of filing: 04.05.2004
(51) Int. Cl.: G01C 21/36, G08G 1/0969

(54) **Method for indicating a route to a destination and navigation system therefor**

(71) Applicant: Harman Becker Automotive Systems GmbH, 76307 Karlsbad (DE)
(72) Inventor: Brülle-Drews, Christian, 22159 Hamburg (DE)
(74) Representative: Bertsch, Florian Oliver

(57) **Abstract**

Navigation system 10 in a vehicle comprising means (11) for detecting the actual position of the vehicle, means (12) for calculating a route to a predetermined destination, means (15) for detecting whether the vehicle has reached the destination and the final parking position, means (16) for determining a route from the final parking position to the predetermined destination, means (12, 14) for outputting indications concerning the route from the final parking position to the predetermined destination.

## Description

The invention relates to a navigation system in a vehicle indicating a route to a predetermined destination and to a method for indicating the route to a predetermined destination.

The invention relates especially to a navigation system which can be used when the vehicle cannot be parked in the close neighborhood of the destination.

### Related Art

In a conventional navigation system usually used in vehicles a current position of the vehicle is detected together with other data of the operating state of the vehicle, and these data are used for guiding the driver of the vehicle to a predetermined destination. Often, however, it is not possible to park the vehicle directly at the predetermined destination. This may be the case when the destination lies within a pedestrian area which is restricted for vehicles. Especially, in cities the parking possibilities may be restricted so that it is nearly impossible to park the vehicle near the destination the user of the vehicle wants to reach. Furthermore, in many locations such as sport arenas, airports or leisure parks large parking grounds exist which are situated distances away from the destination itself.

In other situations, the user of a vehicle has finally arrived at the predetermined destination, but after having looked for a parking possibility the final parking position is situated quite a distance away from the actual destination itself.

Therefore, a need exists to provide the user of the vehicle with information how he or she can get to the final destination after having parked the car at a final parking position.

### Summary of the Invention

This need is met by a navigation system and the method for indicating a route to a destination as proposed in the independent claims. The dependent claims are directed to preferred embodiments.

According to one embodiment of the invention the navigation system in a vehicle comprises means for detecting the current position of the vehicle. The detection of the position may be based on data received from a satellite system such as GPS. Furthermore, the position of the vehicle can be detected using data of the operating state of the vehicle, *i*. *e*., direction changes, speed, etc. However, any other system for detecting the actual position of the vehicle can be used. Furthermore, means for calculating a route to a predetermined destination are provided based on the actual position of the vehicle and based on the destination which is normally input by the driver of the vehicle. The route may be calculated using digital map data. These digital map data can be stored in the navigation system or can be provided from outside the navigation system using wireless communication systems. Furthermore, means are provided for detecting whether the vehicle has reached the final parking position at the destination. When the vehicle has reached the final parking position means are provided for determining a route from the final parking position to the predetermined destination. For informing the driver means for outputting indications concerning the route from the final parking position to the predetermined destination are provided. The navigation system of the invention determines a route from the final parking position to the destination the user of the vehicle can use when he or she leaves the car and walks to the destination on foot or will reach the destination by any other transportation facilities, as will be described in detail later on. The navigation system helps the user of the vehicle to find the destination by outputting indications when the driver needs to walk to the destination, the destination being a restaurant, a theater, a sport arena or any other destination input by the driver of the vehicle or received from other sources outside the vehicle. The user of the vehicle navigation system can now find his or her way more easily as he or she is provided with information how to reach the destination from the final parking position.

Based on the information provided by the navigation system the user of the vehicle can decide whether he or she wants to start the vehicle again and try to find another parking position which is closer to the final destination. In this case the navigation system restarts to guide the user of the vehicle to the destination. According to another embodiment, the navigation system could also ask the driver whether the guiding mode should be (re)started again.

According to a preferred embodiment of the invention said means for outputting indications indicates the pedestrian route to the destination, the direction to the destination relative to the parked vehicle and/or the time it takes to get there. Furthermore, the distance of path, information describing the route to the destination and/or the straight line to the final destination could be output. By way of example, the navigation system could output that the destination is located 200 meters north of the current parking position and can be reached within three minutes, or: The destination or the main entrance is located on the left side and it takes two minutes to get there. The navigation system may also output the whole route from the parking position to the destination.

According to one embodiment of the invention the navigation system may further comprise means for enabling or disabling said means for outputting indications concerning the route from the final parking position to the predetermined destination. When the final parking position is situated directly next to the predetermined destination there may be no need to give further information indicating the route to the destination itself. Furthermore, it is possible that the user of the navigation system knows the neighborhood of the final parking position very well, so that he or she does not need help to get from the parking position to the destination. To this end, means are provided which enable or disable the outputting of indications concerning the route from the parking position to the predetermined destination.

According to another embodiment of the invention the navigation system further comprises a data base comprising roadmap data. The roadmap data consists of vehicle roadmap data and pedestrian roadmap data. The roadmap data used in navigation systems nowadays' comprise all the roadmap data necessary to calculate a route to the predetermined destination when a vehicle is used. The roadmap data also comprise pedestrian roadmap data which are used for calculating the route from the parking position to the destination. This does not mean that for the pedestrian route to the destination only pedestrian roadmap data are used, but on foot a person can use roads a vehicle can use, but can also use other roads which are closed for vehicles or the used vehicle type, such as pedestrian areas, one way streets, steps, pathways etc. The data base may further comprise data such as time tables for public transportations etc., which can be used when used transportation facilities are used on the way from the parking position to the destination. According to one aspect of the invention the navigation system calculates a route from the final parking position to the predetermined destination which considers the fastest and shortest route for a pedestrian. Furthermore, the word "pedestrian" means not necessarily that the person will walk the whole distance. The pedestrian route can also comprise sections of a route for which busses, taxis, ferry boats etc. are used.

According to a further aspect of the invention said means for enabling or disabling said means for outputting indications concerning the route from the final parking position to the predetermined destination enables or disables the outputting of information in dependence of the route from the parking position to the destination. When the route from the final parking position to the destination is determined and it is noticed that the parking position lies directly next to the destination or is too far away from the destination the outputting of indications may be disabled. There are many other criteria for enabling or disabling the output of indications which are described below in more detail.

The navigation system may output indications concerning the route to the final destination by indicating the indications on a display unit of the navigation system and/or by a voice output using loudspeakers of the navigation system.

Besides the fact that the indications are output in the navigation system in the vehicle indications may also be transmitted to a mobile information unit of the user of the vehicle. Therefore, the navigation system further comprises a transmitting/receiving interface which transmits the indications to the mobile information unit, *e. g*., a cellular phone or a PDA or any other device which is able to display information or to output information by voice. Before the user of the vehicle leaves the vehicle the indications are transmitted to the mobile information unit, the user of the mobile information unit now being able to use the indications on his or her way to the destination.

In cases where the route from the final parking position to the destination is long and difficult to find it may be helpful to have the indications concerning the route also on said mobile information unit.

According to one embodiment of the invention, the navigation system can help to determine whether the route to the destination is "difficult" or not. A value describing the complexity of each section of the route can be defined depending on the section of the route.
The complexity of each route section can depend on different parameters, e.g. the functional road class.
The functional road class is a parameter describing the importance of a road, large roads with multiple lanes being another class than small pathways. The smaller the road the more difficult it will be to find it. Therefore, the complexity of a route section depends on the respective road class of this section of the route.
The complexity may further depend on the length of a route section, the number of locations at which a maneuver is necessary to follow the route to the predetermined destination and/or other features like tunnels, serpentines, stairs.

The value describing the complexity is determined for each section of the pedestrian route and the total complexity over the entire pedestrian route can be determined.
If the complexity exceeds a certain threshold value, the output of the pedestrian route is enabled that the user leaving the vehicle is provided with additional information.

According to a further aspect of the invention a method for indicating a route to a predetermined destination in a vehicle comprises the following steps: The current position of the vehicle is detected, a route to a predetermined destination is calculated and it is detected whether the vehicle has reached the final parking position at the destination. In a further step, a route is determined from the final parking position to the destination and indications are output concerning the route from the final parking position to the destination. With the above-mentioned steps the user of the vehicle can find the way to the destination more easily.

If the user of the vehicle wants to have the information concerning the route from the parking position to the destination he or she will enable the output of indications. If the user does not want to have any indications he or she will disable the output of indications.

According to a preferred embodiment of the invention a pedestrian route from the final parking position to the predetermined destination is determined also considering roads which are closed for vehicles when the route from the parking position to the destination is calculated. For calculating the pedestrian route other means of transportation than the own vehicle can be taken into consideration (shuttle busses, public or private transportation services etc.).

Once the pedestrian route is calculated the output of the route from the final parking position to the predetermined destination is enabled or disabled in dependence of the fact that the destination is located in the same road as the final parking position. If the parking position is located in the same road as the final parking position the output of indications may be disabled as there is no need to get further information. The output of information regarding the route may also be enabled when the destination comprises a car park or a parking garage. Sometimes, places such as leisure parks, sport arenas or airports comprise huge car parks or parking garages. When the user of the vehicle has found a parking place in the car park or parking garage he or she might not know anymore where the destination itself is located. In this case, the navigation system of the invention may help by indicating that a certain exit should be used to get to the destination on foot. The output of indications could also be enabled or disabled depending on the fact that the destination can be reached within a certain amount of time. If the calculated route from the parking position to the predetermined destination is within walking distance the output may be enabled, in other cases the output may be disabled.

The output may also be enabled and disabled depending on the fact whether the distance from the parking position to the destination is larger or smaller than a threshold value. If the distance is smaller than a threshold value the output may be disabled as there is no need for further information, or when the distance is larger than a threshold value the output may be disabled as the destination is not within walking distance or could only be reached by using roads which are closed for vehicles such as highways. In this case, however, the navigation system could inform the driver that the destination cannot be reached on foot or the driver can be informed that it takes more than a certain amount of time so that the user of the vehicle should not walk.

The output of indications could also be enabled or disabled depending on the fact that the destination is located in a pedestrian area. If the destination is situated in a pedestrian area indications may be helpful where to find the destination in the pedestrian area.
The output may also be enabled or disabled depending on the complexity of the calculated pedestrian route. If the complexity of the pedestrian route exceeds a predetermined threshold value, the output of indications is enabled, otherwise disabled.

Furthermore, the navigation system may comprise an enable or disable button for enabling or disabling the output of indications. If the user of the vehicle always wants to be informed of the route to the final destination the enabling/ disabling button may be employed in such a way that the indications concerning the route are always output. Furthermore, the button can be configured in such a way that the output is always disabled, so that there are no indications at all.

According to one embodiment of the invention by outputting indications concerning the route from the final parking position to the destination the direction of the destination relative to the final parking position is output, *e. g*., the destination is situated on the right-hand side. Furthermore, the time it takes to get there may be output, *e. g*., the destination can be reached within two minutes walking distance. Furthermore, the exact pedestrian route to the destination may be output describing the complete route to the destination. According to another embodiment of the invention, additional information concerning the pedestrian route to the destination can be output and/or additional information relating to the destination itself could be output. By way of example, the additional information concerning the pedestrian route could comprise the information that for reaching the destination additional transportation possibilities can be used. This information could be: For terminal 4 (destination) please use shuttle bus no. 6. The bus will stop in front of the main exit of the parking garage. The system of the invention can output any additional information useful for a pedestrian to get to a certain destination. This information could comprise time tables from public transportation services, etc.

According to a further aspect of the invention it has to be determined, whether the vehicle has reached the predetermined destination. In nowadays' navigation systems the user is informed when he or she has reached the final destination. The user could be informed orally by a voice indicating that the destination has been reached or any other similar indications. For detecting whether the final parking position has been reached it may be detected whether the engine of the vehicle has been turned off. Furthermore, the actual position of the vehicle may be compared to the geographical position of the predetermined destination. If it is determined that the final parking position only differs from the destination by a certain distance and the engine is turned off, it may be detected that the final parking position has been reached.

According to a further embodiment of the invention the indications concerning the route from the parking position to the destination may be transmitted to a mobile information unit of the user of the vehicle. Indications may be output orally or visually in the vehicle itself and may, at the same time, be transmitted to the mobile information unit of the user, so that the user can be informed of the pedestrian route to the destination on his way while he or she is walking.

### Brief Description of the Drawings

Specific embodiments of the invention will now be described, by way of example, with respect to the accompanying drawings, in which
- Fig. 1: shows a system for indicating a pedestrian route to the destination,
- Fig. 2: shows a flowchart with the different steps for informing the user of the route to the destination,
- Fig. 3: shows a flowchart of a further detail of Fig. 2.

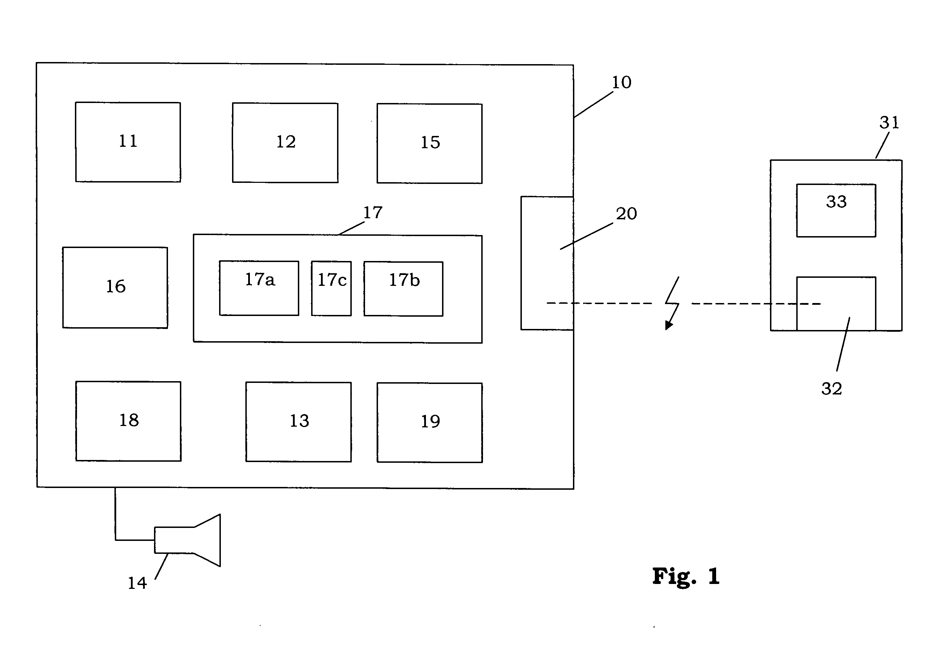

In Fig. 1 a navigation system 10 for outputting indications concerning the route from the final parking position to the destination is shown schematically. The navigation system 10 comprises a position detection unit 11 for detecting the actual position of the vehicle. Furthermore, a route calculating unit 12 is provided for calculating the route from the actual position to a predetermined destination. The driver of the vehicle can be informed, what route to take by using a display 13 or by using loudspeakers 14 of the navigation system 10. The above described units are present in every navigation system and their functioning is well known to the person skilled in the art so that a detailed description of their functioning is omitted. The navigation system 10 further comprises a unit 15 for detecting whether the final parking position has been reached. Furthermore, a pedestrian route calculation unit 16 is provided for calculating the route from the final parking position to the predetermined destination. In order to do so the navigation system 10 comprises a data base 17 comprising road map data which comprises data 17a which are used for calculating the route to the destination of the vehicle, and comprises roadmap data 17b for calculating a pedestrian route to the predetermined destination. For determining the pedestrian route, one way streets, pedestrian areas can be used in combination with other roads in order to calculate the route to the predetermined destination. Thus, the data used for calculating a route for a vehicle differ from the data used for calculating a route for a pedestrian. Additionally, the data base 17 comprises data 17c containing line tables for shuttle busses, public transportations, and/or information about locations of entrances in large buildings or sport arenas, or any other information which can be helpful for a pedestrian who wants to reach a certain destination not using the own vehicle, the latter being parked. It should be understood that the roadmap data 17a and 17b and 17c need not be two physically separated data. In the embodiment shown they are shown as two independent roadmap data in order to emphasize that for calculating a pedestrian route other roadmap data can be used compared to roadmap data used for calculating a vehicle route.

A disabling/ enabling unit 18 is provided for disabling or enabling the output of indications concerning the route from the final parking position to the destination. A control unit 19 controls the functioning of the navigation system. Furthermore, a transmitting/receiving unit 20 is provided for transmitting the indications concerning the route from the final parking position to the destination to a mobile information unit 30. This mobile information unit 30 may be a cellular phone or a PDA or any other mobile unit which is able to receive the data from the navigation system 10 via a transmitting/receiving unit 32 and which is able to inform the user of the mobile information unit of the received data, *e. g*., via a display 33.

The control unit may further calculate a value of complexity for the pedestrian route by summing up the complexity values of the different sections of the route. If a certain threshold value is exceeded, the output of indications is enabled or disabled.

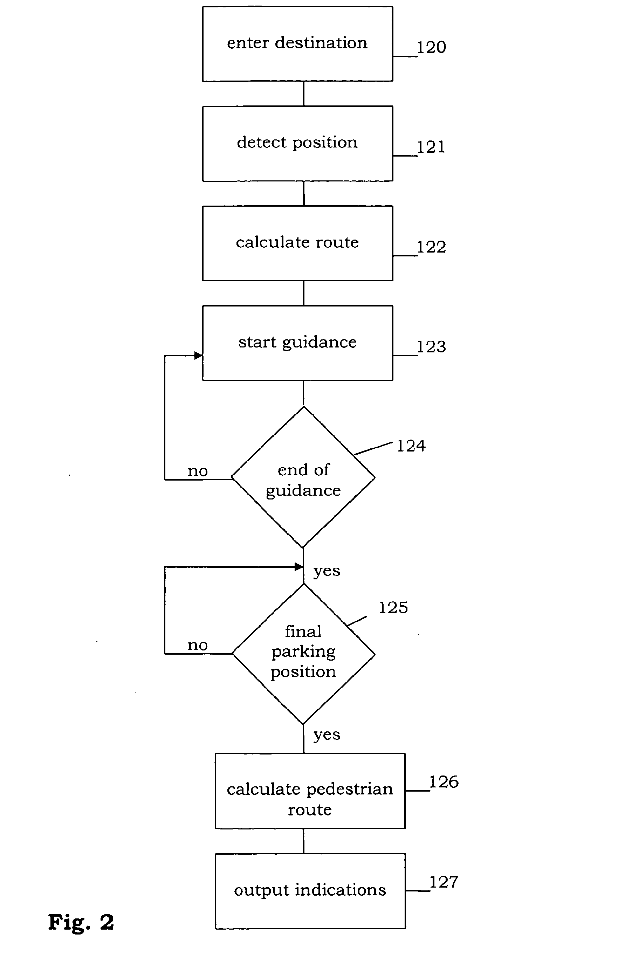

In Fig. 2 the different steps for informing the user of the vehicle how to walk to the predetermined destination are shown in more detail. In a first step 120 the predetermined destination is entered into the navigation system 10 by using an input unit (not shown) of the navigation system. The destination could also be received via the transmitting/receiving unit 20 receiving data from a web server or from another communication unit. In step 121 the actual position of the vehicle is calculated using the position detection unit 11 shown in Fig. 1. In step 122 a route for the vehicle from the actual position to the predetermined destination is calculated and in step 123 the navigation system starts to guide the user of the vehicle by outputting indications what road to take. In step 124 it is asked whether the navigation is completed or not, i. e., whether the vehicle has reached the final destination. The algorithms used to detect whether the final destination has been reached are well known to the person skilled in the art, so that they are not explained in detail. If the vehicle has reached the predetermined destination it is asked in step 125 whether the vehicle has reached the final parking position. This can be done by detecting whether the engine of the vehicle has been turned off. However, any other possibility for detecting whether the vehicle has reached the final parking position can be used, one possibility being the detection whether the position of the vehicle changes or not for a predetermined amount of time in the neighborhood of the final parking position. Another possibility for detecting the final parking position is the detection of the vehicle door position, *i.e.* whether the door has been opened.
Furthermore, it can be detected whether the driver's seat is occupied or not. If the final parking position has not been reached the system returns to ask whether the final parking position has been reached. Furthermore, it can be detected whether the vehicle stops for a predetermined amount of time. This can be helpful if the invention is used in a taxi by way of example, which may not turn off the engine when a client gets off the vehicle.
The implementation of step 124 to ask whether the guidance can be terminated is incorporated as to avoid that the pedestrian route is calculated from a location which is far away from the predetermined destination. With this step it can be avoided that a pedestrian route is calculated when the driver of the vehicle stops at a gas station to take up fuel. In step 124 the system can ask whether the actual position of the vehicle is within the surroundings of the predetermined destination. If the vehicle stops at a position near the predetermined destination and engines are turned off the system can determine that the final parking position has been reached in step 125.

If it is determined that the final parking position has been reached a pedestrian route is calculated in step 126. For calculating the pedestrian route the pedestrian roadmap data 17b are used and a pedestrian route is calculated also considering one way streets, pedestrian areas, etc. In step 127 indications concerning the route to the predetermined destination are output. In this step 127 the direction of the destination relative to the final parking position, the time it takes to get there, the exact pedestrian route to the destination and any additional information relating to the route or to the destination itself could be output.

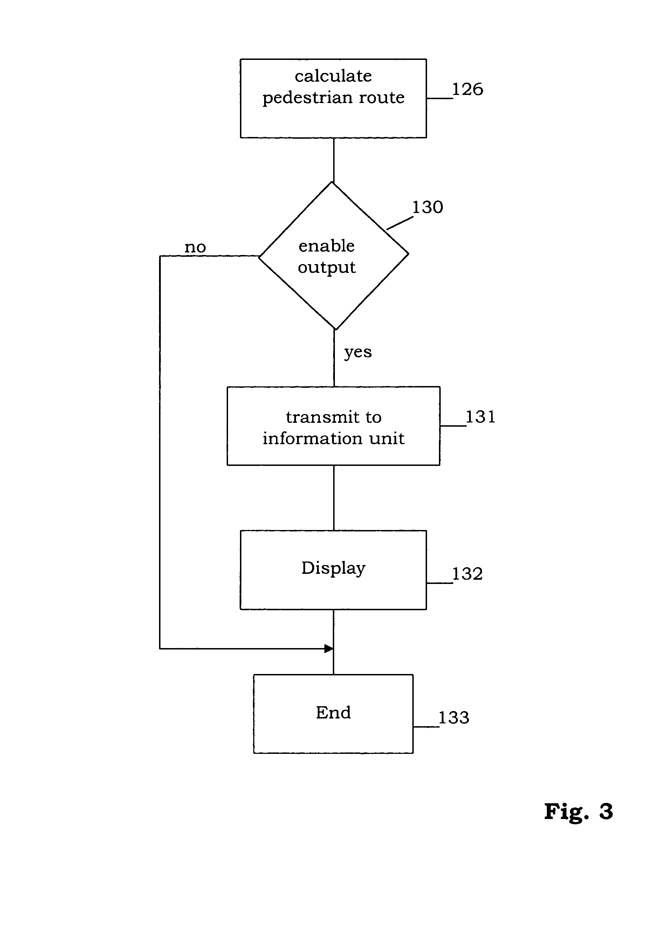

In Fig. 3 some steps of Fig. 2 are shown in more detail. When the pedestrian route is calculated in step 126, it is asked in step 130 whether the outputting of indications is enabled or not. The outputting of indications concerning the pedestrian route to the predetermined destination could depend on the following criteria. The route is output, if the destination is situated in another road as the detected final parking position, the destination is output when the vehicle parks in a large parking garage comprising different exits, so that the pedestrian route from the parking garage to the destination may be helpful. Furthermore, the output may be enabled when the destination can be reached within a certain amount of time, *i. e*., is in walking distance. Furthermore, it may be asked whether the destination is situated in a pedestrian area. If the output is enabled the indications concerning the route may be transmitted to the transmitting/receiving unit 20 which transmits the data to the mobile information unit 31 of Fig. 1 (step 131). This mobile information unit can then be used during walking. Additionally, the indications concerning the route are displayed in step 132 on the navigation system 10 in the vehicle itself. It can be decided that the indications of the route are only displayed in the vehicle itself as in step 132, or are only transmitted to the information unit as shown in step 131, or both steps can be used, before the system ends in step 133.

The navigation system of the present invention helps the user of a navigation system installed in a vehicle to get further information regarding the route from the final parking position to the predetermined destination. Using this additional information the user can more easily find the predetermined destination. Especially in crowded areas, such as large cities or in other places where free parking space is rare the present invention can help to find the way from the parking position to the destination.

## Claims

1. Navigation system in a vehicle comprising:
- means (11) for detecting the current position of the vehicle,
- means (12) for calculating a route to a predetermined destination,
- means (15) for detecting whether the vehicle has reached the final parking position at the destination,
- means (16) for determining a route from the final parking position to the predetermined destination,
- means (12, 14) for outputting indications concerning the route from the final parking position to the predetermined destination.

2. Navigation system according to claim 1, further comprising means (18) for enabling or disabling said means for outputting indications concerning the route from the final parking position to the predetermined destination.

3. Navigation system according to claim 1 or 2, further comprising a data base (17) comprising roadmap data, the roadmap data comprising vehicle roadmap data (17a) and pedestrian roadmap data (17b) .

4. Navigation system according to any of the preceding claims, **characterized in that** said means (16) for determining the route from the final parking position to the predetermined destination determines a pedestrian route also considering roads which are closed or restricted for the used vehicle type.

5. Navigation system according to any of claims 2 to 4, **characterized in that** said means (18) for enabling or disabling said means for outputting indications concerning the route from the final parking position to the predetermined destination enables or disables the outputting of indications in dependence of the route from the final parking position to the predetermined destination.

6. Navigation system according to any of the preceding claims, wherein said means (13, 14) for outputting indications indicates the pedestrian route to the destination, the direction to the destination, the time it takes to get there, the distance of path, information describing the route to the final destination and/or the straight line to the final destination.

7. Navigation system according to any of the preceding claims, further comprising a transmitting/receiving interface (20) which transmits the indications to a mobile information unit of the user of the vehicle.

8. Method for indicating a route to a predetermined destination in a vehicle, comprising the following steps:
- detecting the current position of the vehicle,
- calculating a route to a predetermined destination,
- detecting, whether the vehicle has reached the final parking position at the destination,
- determining a route from the final parking position to the destination, and
- outputting indications concerning the route from the final parking position to the destination.

9. Method according to claim 8, further comprising the step of enabling or disabling the output of indications concerning the route from the final parking position to the predetermined destination.

10. Method according to claim 8 or 9, wherein a pedestrian route from the final parking position to the predetermined destination is determined also considering roads which are closed or restricted for the used type of vehicle.

11. Method according to claim 9 or 10, wherein the output of the route from the final parking position to the predetermined destination is enabled or disabled in dependence of the fact that the destination is situated in the same road as the final parking position, the destination comprises a car park or a parking garage, the destination can be reached within a certain amount of time, the destination is situated in a pedestrian area, the distance from the final parking position to the destination is larger or smaller than a threshold value, the complexity of the route is higher/smaller than a predetermined threshold value, and/or the output is always enabled, that the indication concerning the route to the destination should always be output.

12. Method according to any of claims 8 to 11, wherein outputting indications concerning the route from the final parking position to the destination comprises the step of outputting the direction of the destination relative to the final parking position, outputting the time it takes to get there, outputting the pedestrian route to the destination, outputting additional information concerning the pedestrian route to the destination, and/or outputting additional information relating to the destination.

13. Method according to any of claims 8 to 12, wherein the step of outputting indications concerning the route from the final parking position to the destination comprises the step of informing the user of the vehicle that for reaching the destination additional transportation possibilities can be used.

14. Method according to any of claims 8 to 13, wherein the step of detecting whether the vehicle has reached the final parking position comprises the step of detecting whether the engine of the vehicle has been turned off.

15. Method according to any of claims 8 to 14, further comprising the step of transmitting the indications concerning the route from the final parking position to the destination to a mobile information unit of the user of the vehicle.
